**Europäisches Patentamt**

(19) **European Patent Office**

**Office européen des brevets**

(11) Numéro de publication: **0 039 672**
**B1**

(12) **FASCICULE DE BREVET EUROPEEN**

(45) Date de publication du fascicule du brevet: **15.02.84**

(51) Int. Cl.³: **B 60 D 1/00**

(21) Numéro de dépôt: **79901664.7**

(22) Date de dépôt: **30.11.79**

(86) Numéro de dépôt international:
**PCT/FR79/00117**

(87) Numéro de publication internationale:
**WO 81/01391 28.05.81 Gazette 81/13**

(54) **DISPOSITIF D'ATTELAGE DE VEHICULE.**

(30) Priorité: **13.11.79 FR 7927906**

(43) Date de publication de la demande:
**18.11.81 Bulletin 81/46**

(45) Mention de la délivrance du brevet:
**15.02.84 Bulletin 84/7**

(84) Etats contractants désignés:
**AT CH DE FR GB NL SE**

(56) Documents cités:
**DE - A - 1 963 370**
**DE - A - 2 820 529**
**DE - B - 1 059 297**
**DE - B - 1 065 281**
**FR - A - 1 229 306**
**FR - A - 1 255 203**
**FR - A - 2 123 273**
**FR - A - 2 368 210**
**GB - A - 129 544**
**GB - A - 875 270**
**GB - A - 1 483 588**
**GB - A - 1 527 924**
**US - A - 3 865 406**

(73) Titulaire: **BUDIN, René**
**Le Tillou**
**F-18700 Sainte Montaine (FR)**

(72) Inventeur: **BUDIN, René**
**Le Tillou**
**F-18700 Sainte Montaine (FR)**

(74) Mandataire: **Dupuy, René Gaston et al,**
**Cabinet René G. Dupuy & Jean M.L. Loyer 14, Rue**
**La Fayette**
**F-75009 Paris (FR)**

Courier Press, Leamington Spa, England.

Dispositif d'attelage de vèhicule

L'invention se rapporte à un nouveau type de dispositif d'attelage fixé à la partie arrière d'un véhicule tracteur en vue d'y accoupler la flèche d'une remorque à un ou deux essieux, d'une machine agricole ou de génie civil, ou d'un outil porté, ce dispositif étant du type dans lequel l'organe unciné est déplacé selon une trajectoire verticale pour passer de la position de prise de la manille de ladite flèche à la position d'accouplement (comme par exemple celui qui est décrit dans le DE—B—1059297, le DE—B—1065281, le GB—A—875270).

Non seulement l'invention vise un dispositif universel permettant de réaliser l'accouplement automatique d'attelage soit directement soit par l'intermédiaire d'une barre oscillante de type connu, mais encore et principalement, elle complète les dispositifs d'attelage du type en cause par un organe de sécurité, entrant en action automatiquement et empêchant tout désaccouplement intempestif.

En général, les règlementations propres aux divers pays imposent des mesures de verrouillage des éléments coopérant dans leur position d'attelage.

Pour obtenir le verrouillage en position haute, le DE—B—1059297 propose un dispositif à pêne hemicylindrique tournant selon une axe horizontal dans une gâche circulaire susceptible de coopérer avec une encoche de même forme prévue horizontalement sur le tenon vertical pénétrant dans la gâche en position d'accouplement.

Le pêne tournant est maintenu en position de verrouillage par un ressort et au contraire dégagé par action d'une timonerie (câble).

Ainsi, l'opérateur doit synchroniser deux manoeuvres, celle de la remontée de l'organe de saisie de la flèche et celle de l'ouverture de la gâche.

Il est évident que ce synchronisme est aléatoire, en particulier par le fait que le dispositif d'attelage est hors de la vue de l'opérateur.

Le GB—A—875270 décrit lui aussi un attelage du type en cause comportant d'une part une glissière solidiare du tracteur, et portant le tenon vertical de verrouillage, et d'autre part un coulisseau déplaçable verticalement par rapport à cette glissière au moyen d'un vérin, coulisseau duquel est solidaire la gâche devant coopérer avec ce tenon.

Le verrouillage de la glissière et du coulisseau en position d'accouplement est obtenu par un levier comportant un ergot articulé sur la glissière et poussé vers une encoche du coulisseau par un ressort de compression; le déverrouillage se fait par un levier en renvoi de sonnette.

Il n'y a donc verrouillage que si l'ergot est convenablement engagé dans l'encoche, ce qui suppose une descente précise et non contrariée du coulisseau dans la glissière.

Par ailleurs, un tel verrouillage est peu fiable, le ressort pouvant être décomprimé par exemple par une secousse ou un choc reçu par l'une des véhicules et plus particulièrement par la remorque.

Le dispositif de sécurité selon la présente invention est conçu d'une manière qui rend automatique son entrée en action, sans nécessiter aucune précision dans la manoeuvre d'attelage.

Par rapport au GB—A—875270 qué décrit déjà un dispositif d'attelage permettant l'accouplement automatique de la manille terminant la flèche d'une remorque à un véhicule tracteur, au moyen d'une pièce uncinée solidaire d'un élément mobile se déplaçant alternativement selon des translations verticales, rectilignes par rapport à une partie fixe portée par ce véhicule tracteur depuis une position basse de prise de cette manille jusqu'à une position haute d'attelage pour laquelle une contrepièce enferme la manille dans ladite partie uncinée, la descente intempestive de la partie uncinée étant empêchée par un verrou consistant en un crochet pivotant dans un plan vertical selon un axe horizontal supporté par ladite partie fixe et coopérant en position de verrouillage avec un organe porté par l'élément mobile verticalement, l'invention est caractérisée en ce que l'organe précité est un ergot horizontal coopérant en position haute avec le crochet dont le profil courbe intérieur assure le verrouillage et dont le profil extérieur, en forme de came, produit l'effacement automatique du crochet au contact de l'ergot remontant verticalement, au moment précédent l'accrochage.

Brève description des dessins

D'autres particularités et avantages apparaîtront à la lecture de la description et des revendications qui vont suivre, lesquelles, faites en référence aux dessins annexés, donnés à titre d'exemple de réalisation, feront comprendre comment la présente invention peut être mise en pratique.

— la figure 1 est un schéma montrant le dispositif, objet de l'invention, en position basse de prise;
— la figure 2 est une vue en coupe de profil de ce dispositif;
— la figure 3 et la figure 4 montrent deux variantes de la commande du verrou de sécurité empêchant les désaccouplements intempestifs.

Meilleure manière de réaliser l'invention

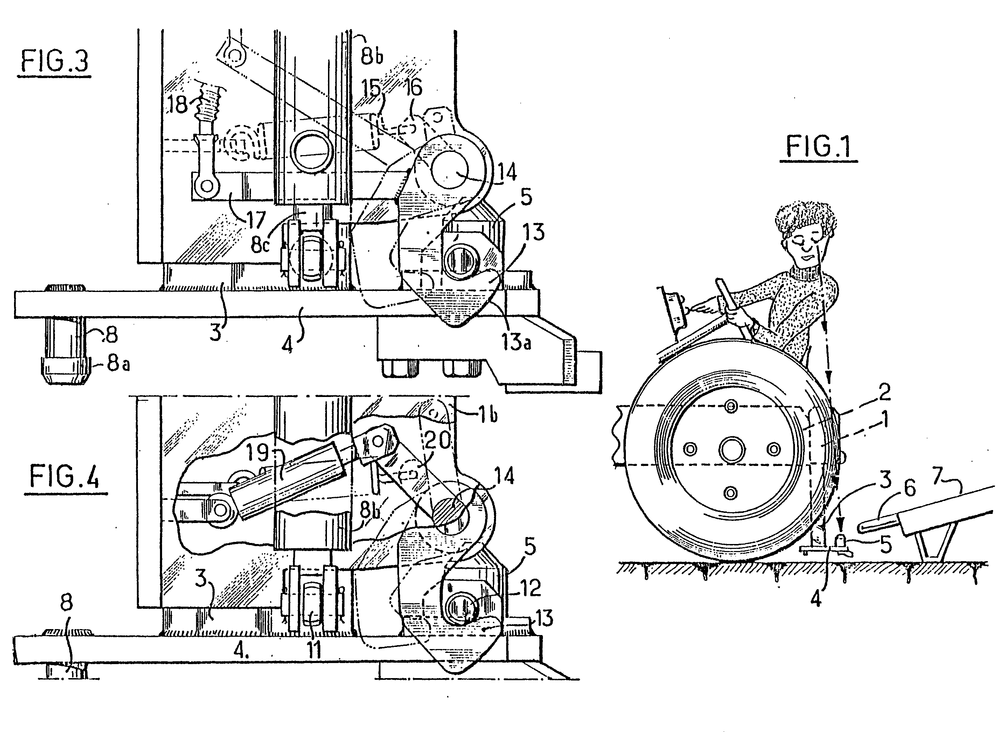

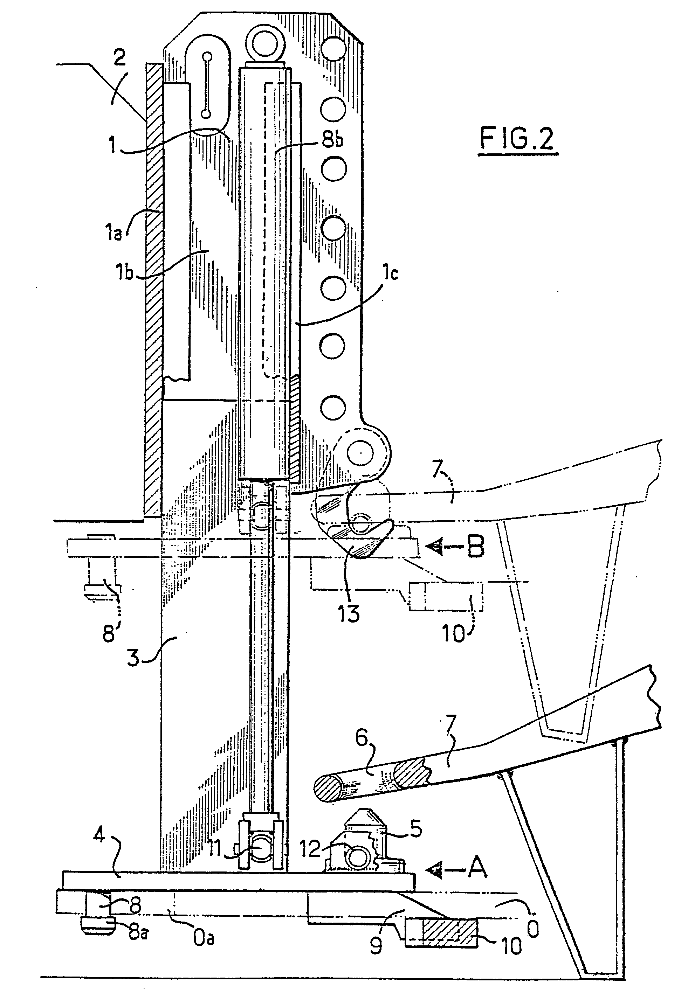

Comme on le voit sur les figures 1 et 2, le dispositif en cause comprend une platine 1 fixée à la partie arrière 2 du tracteur et du chariot ou coulisseau 3 se terminant à son extrémité inférieure par une partie uncinée ici réalisée par un socle 4 porteur d'un téton vertical 5 destiné à être enfilé dans l'anneau ou manille 6 de la flèche 7 du véhicule tracté.

Le chariot ou coulisseau 3 peut avoir des mouvements verticaux de translation rectiligne par rapport à la platine 1 sous l'action soit des bras de relevage classiques existant sur la plupart des tracteurs (non représentés), soit mieux, de vérins hydrauliques ou pneumatiques tels 8b (fig. 2) placés latéralement.

Du fait de cette translation, le téton 5 se déplace (fig. 2) depuis la position basse A de prise de la manille 6 jusqu'à une position haute B de remorquage.

Comme on le voit à la figure 1, dans ces deux positions extrêmes le téton 5 reste visible du conducteur, même si celui-ci dispose d'une cabine, car dans ce cas, il y est toujours prévue une glace basse lui permettant de voir le sol dans la zone immédiatement adjacente aux roues.

Dans une forme préférentielle de réalisation, la platine 1 fixée au tracteur forme une sorte de glissière dans laquelle peut coulisser verticalement une pièce mobile (chariot, curseur ou coulisseau) 3.

Cette platine 1 se présente sous une forme sensiblement en U réalisée par une plaque 1$^a$ rigidement fixée au véhicule solidaire de deux flancs latéraux 1$^b$, des cornières 1$^c$ étant soudées les unes à la plaque 1$^a$, les autres aux flancs 1$^b$ pour former une glissière de chaque côté de la platine.

Le chariot, curseur ou coulisseau 3 est formé de deux méplats latéraux verticaux reliés par le socle horizontal 4 supportant le téton d'attelage 5. Chaque méplat coulisse dans l'une des glissières précédemment définies.

Bien entendu, on peut concevoir diverses variantes de cet ensemble. Par exemple le chariot pourrait comporter des galets roulant à l'intérieur de chaque glissière.

Par exemple encore, la partie uncinée pourrait être réalisée en remplaçant l'ensemble 4/5 par un crochet conventionnel, mais cette solution serait moins bonne puisqu'elle ferait perdre au dispositif, objet de l'invention, une partie de son universalité d'usage, du fait qu'il ne pourrait plus recevoir une barre oscillante du type classique.

En effet, dans la solution qui vient d'être décrite en regard de la figure 2, le socle 4, sous sa face inférieure, porte d'une part un ergot 8 à son extrémité antérieure et d'autre part un coulant 9 à son extrémité postérieure.

Ce coulant 9 est formé entre un secteur 10 solidaire latéralement du socle 4, et ledit socle.

La barre oscillante 0 représentée sur la figure 1 en traits mixtes est enfilée dans le coulant 9 et repose sur le secteur 10 auquel elle peut être assemblée d'une manière classique par une broche, tandis que son oeil 0$^a$ judicieusement formé est traversé par l'ergot 8 et soutenu par la tête 8$^a$ de celui-ci.

Le chariot 3 comporte au voisinage du socle 4 et de chaque côté, un axe 11 de manoeuvre sur lequel on assemble, soit l'extrémité des bras de relevage classique, soit l'extrémité de la tige 8$^c$ du piston d'un vérin 8$^b$ dont le cylindre est solidaire des flancs 1$^b$ de la platine fixe.

En principe, seule la remontée est provoquée, la descente du chariot s'effectuant par gravité.

les normes de sécurité imposent que la partie uncinée soit verrouillée positivement pendant la période de remorquage.

Selon l'invention, pour satisfaire à cette règle, le chariot 3 ou plus exactement son socle 4 est porteur d'au moins un ergot latéral 12 destiné à venir coopérer avec un crochet 13 oscillant selon un axe 14 tourillonnant dans les flancs 1$^b$.

Ce crochet 13 est maintenu dans la position d'accrochage de l'axe 12 par exemple par un ressort 15 agissant sur un levier 16 solidaire de l'axe 14 ou du crochet 13.

L'effacement de ce crochet 13 peut s'effectuer par basculement selon l'axe 14 au moment précédant l'accrochage, lorsque l'ergot 12 remontant avec le chariot 3 et le socle 4 rencontre le profil extérieur dudit crochet formant came.

Cet effacement peut également être provoqué lorsque l'on désire que le chariot redescende par gravité soit pour libérer la manille 6 soit pour permettre l'accrochage d'une autre flèche.

La figure 3 illustre un mode de réalisation selon lequel le crochet 13 est solidaire de l'une des extrémités d'un levier 17, l'autre extrémité pouvant être actionnée par une timonerie par exemple un câble du type Bowden 18.

Il est aisé de comprendre qu'une traction sur ce câble provoque un basculement du levier 17 selon l'axe 14 et par corollaire un basculement du crochet 13 lui permettant de libérer l'ergot 12.

Selon le mode de réalisation de la figure 4, le noyau d'un électro-aimant 19 est articulé à l'extrémité d'un levier 20 solidaire de l'axe 14 ou du crochet 13. L'excitation de la bobine de cet électro-aimant produit le basculement de ce levier 20 et par corollaire celui du crochet dans le sens de l'effacement, libérant l'ergot 12. Un ressort joue en antagonisme de cet électro-aimant pour ramener le crochet en position d'accrochage.

Sans qu'il soit nécessaire de faire une plus ample description ni même d'ajouter une figure, il est aisé de comprendre que l'électro-aimant pourrait être remplacé par un vérin pneumatique ou hydraulique.

Avantageusement, l'appareil est pourvu d'un dispositif d'accrochage tel que décrit pour chacun de ses flancs, formant ainsi une double sécurité empêchant le décrochage intempestif.

Par ailleurs, les crochets 13 étant extérieurs à l'esemble, constituent le repère visible exigé par certaines réglementations, permettant le contrôle de la position active des crochets.

Possibilités d'applications industrielles

L'invention s'applique plus particulièrement aux tracteurs agricoles ou de génie civil.

**Revendications**

1. Dispositif d'attelage permettant l'accouplement automatique de la manille (6) terminant la flèche (7) d'une remorque à un véhicule tracteur (2), au moyen d'une pièce uncinée (4) solidaire d'un élément mobile (3) se déplaçant alternativement selon des translations verticales, rectilignes par rapport à une partie fixe (1) portée par ce véhicule tracteur depuis une position basse (A) de prise de cette manille jusqu'à une position haute (B) d'attelage pour laquelle une contrepièce (5) enferme la manille dans ladite partie uncinée, la descente intempestive de la partie uncinée étant empêchée par un verrou consistant en un crochet (13) pivotant dans un plan vertical selon une axe horizontal (14) supporté par ladite partie fixe et coopérant en position de verrouillage avec un organe (12) porté par l'élément mobile verticalement, caractérisé en ce que l'organe précité est un ergot horizontal (12) coopérant en position haute avec le crochet dont le profil courbe intérieur assure le verrouillage et dont le profil extérieur (13a), en forme de came, produit l'effacement automatique du crochet au contact de l'ergot remontant verticalement, au moment précédent l'accrochage.

2. Dispositif d'attelage selon la revendication 1, dans lequel la pièce uncinée est constituée par un téton vertical (5) porté par un socle (4) solidaire de l'élément mobile (3) verticalement, caractérisé en ce que ledit socle (4) porte l'ergot horizontal de verrouillage (12) sur sa face supérieure.

3. Dispositif d'attelage selon la revendication 2, comportant des moyens de fixation momentanée d'une barre d'attelage d'engins, caractérisé en ce que ces moyens de fixation sont constitués d'une part, par un ergot (8) vertical placé sous le socle (4) à son extrémité antérieure et d'autre part, à son extrémité postérieure par un coulant (9) formé entre un secteur perforé (10) solidaire latéralement du socle (4), et ledit socle.

**Patentansprüche**

1. Kupplungsvorrichtung, die das automatische Ankuppeln des Auges (6) am Ende einer Deichsel (7) eines Anhängers an ein Zugfahrzeug (2) mit Hilfe eines an einem beweglichen Element (3) befestigten Hakengliedes (4) gestattet, welches Element in vertikalen Bewegungen gradlinig zu einem feststehenden, an dem Zugfahrzeug gehaltenen Abschnitt (1) wahlweise zwischen einer abgesenkten Stellung (A) zur Erfassung des Auges und einer angehobenen Kuppelstellung (B) hin und her verfahrbar ist, in der ein Gegenstück (5) das Auge an dem Hakenglied sichert, wobei das unbeabsichtigte Absinken des Hakengliedes durch eine Sperre verhindert wird, die aus einem in einer vertikalen Ebene um eine horizontale Achse (14) an dem feststehenden Abschnitt schwenkbaren Haken (13) besteht, der in der Sperrposition mit einem an dem beweglichen Element angebrachten Teil (12) zusammenwirkt, dadurch gekennzeichnet, daß das Teil ein horizontaler Bolzen (12) ist, der in der angehobenen Kuppelstellung mit dem Haken zusammenwirkt, dessen gekrümmtes Innenprofil die Verriegelung sicherstellt und dessen Außenprofil (13a) in Form einer Nocke das automatische Zurückweichen des Hakens beim Kontakt mit dem vertikal aufwärtsbewegten Bolzen im Augenblick unmittelbar vor dem Ankuppeln hervorruft.

2. Kupplungsvorrichtung nach Anspruch 1, bei der das Hakenglied aus einem vertikalen Zapfen (5) besteht, der an einem an dem vertikal beweglichen Element (3) gehaltenen Sockel (4) befestigt ist, dadurch gekennzeichnet, daß der Sockel (4) auf seiner Oberseite den horizontalen Verriegelungsbolzen (12) trägt.

3. Kupplungsvorrichtung nach Anspruch 2 mit Mitteln zur vorübergehenden Befestigung einer Kupplungsstange für Maschinen, dadurch gekennzeichnet, daß die Befestigungsmittel einerseits aus einem vertikalen Zapfen (8) auf der Unterseite des Sockels (4) an seinem vorderen Ende und andererseits aus einer Gleitführung (9) an seinem hinteren Ende besteht, die zwischen einem perforierten Abschnitt (10) und dem Sockel (4) gebildet ist, wobei der perforierte Abschnitt (10) seitlich an dem Sockel (4) befestigt ist.

**Claims**

1. A coupling device enabling the automatic coupling of the shackle (6) terminating the draw-bar (7) of a trailer to a towing vehicle (2), by means of a hook element (4) rigid with a movable element (3) which is alternately displaced in vertical translation, in directions which are rectilinear with respect to a fixed portion (1) supported by this towing vehicle from a low position (A) in which the shackle is engaged to a high coupling position (B) for the purposes of which a counter-element (5) closes the shackle in the said hook element inadvertent lowering of the hook element being prevented by a bolt comprising a hook (13) pivoting in a vertical plane about a horizontal axis (14) supported by the said fixed portion and engaging in the locking position with a member (12) supported by the vertically movable element, characterised in that the said member is a horizontal catch (12) engaging in the high position with the hook whose internal curved profile ensures locking and whose external profile (13a) in the form of a cam causes the automatic retraction of the hook from contact with the vertically rising catch at the moment preceding coupling.

2. A coupling device as claimed in claim 1, in which the hook element is constituted by a vertical stud (5) supported by a base (4) rigid with the vertically moving element (3), characterised in that the said base (4) supports the horizontal locking catch (12) on its upper face.

3. A coupling device as claimed in claim 2, comprising means for the instantaneous fastening of a vehicle drawbar, characterised in that the fastening means are constituted, on one hand, by a vertical catch (8) disposed below the base (4) at its front end and, on the other hand, at its rear end by a slide (9) formed between a perforated sector (10) rigid laterally with the base (4) and the said base.

FIG.1

FIG.3

FIG.4

FIG.2